# EUROPEAN PATENT SPECIFICATION

(11) **EP 2 501 083 B1**
(45) Date of publication and mention of the grant of the patent: **28.03.2018**
(21) Application number: 09846416.7
(22) Date of filing: 22.12.2009
(51) Int. Cl.: H04L 12/715, H04L 12/721

(54) **RELAY NODE, DISTRIBUTED NETWORK OF RELAY NODE AND NETWORKING METHOD THEREOF**
RELAISKNOTEN, VERTEILTES NETZWERK EINES RELAISKNOTENS UND NETZWERKVERFAHREN DAFÜR
NOEUD DE RELAIS, RÉSEAU RÉPARTI DE NOEUDS DE RELAIS ET PROCÉDÉ ASSOCIÉ DE MISE EN RÉSEAU

(30) Priority: 13.11.2009 CN 200910222927
(43) Date of publication of application: 19.09.2012
(73) Proprietor: ZTE Corporation, Shenzhen, Guangdong 518057 (CN)
(72) Inventor: HU, Yongsheng, Shenzhen Guangdong 518057 (CN); CHEN, Zhifeng, Shenzhen Guangdong 518057 (CN); HAO, Zhenwu, Shenzhen Guangdong 518057 (CN)
(74) Representative: Lampis, Marco
(86) International application number: PCT/CN2009/075832
(87) International publication number: WO 2010/148617

(56) References cited:
- WO-A1-2008/066560
- CN-A- 101 437 045
- US-A1- 2006 045 065
- US-A1- 2006 087 985
- MIGUEL CASTRO ET AL: "Secure routing for structured peer-to-peer overlay networks", ACM SIGOPS OPERATING SYSTEMS REVIEW, vol. 36, no. SI, 31 December 2002 (2002-12-31), page 299, XP055013216, ISSN: 0163-5980, DOI: 10.1145/844128.844156

## Description

### Technical Field

The present invention relates to the communication field, and in particular, to a relay node, a distributed network of the relay node and a networking method thereof. Related technologies are known from WO2008/066560A1 and MIGUEL CASTRO ET AL: "Secure routing for structured peer-to-peer overlay networks".

### Background of the Related Art

The Peer-to-Peer (P2P) technology performs marginalization to the location of the "content" in the network, and the P2P network is also called as the overlay network. According to the network topology, the P2P network is divided into a centralized peer-to-peer network, a distributed peer-to-peer network and a mixed peer-to-peer network, wherein, the distributed peer-to-peer network is also divided into a structured peer-to-peer network and a non-structured peer-to-peer network. The distributed peer-to-peer network has already become a kind of widely applied P2P network architecture since it has the advantage of decentralization and easy to scale up.

The resources in the P2P network are distributed in each peer-to-peer member node, and each node in the network is a client and also a server. The participants in the network share their own resources, such as computing power, storage capacity, bandwidth capacity, etc., and two peer-to-peer nodes (Peer) communicate directly without through other middle entity. However, there is a research showing that the default path selected by the IP route protocol based on the current Internet is not optimal, and it exists that the quality of service (QoS) of the transmission between the nodes can be improved through the optimization route path of a certain relay.

Meanwhile, there are a large number of network address translations (NAT) and the fire walls in the current Internet environment, and these technologies and devices have aggravated the problem of the insufficient address of the Internet protocol version 4 (IPV4); meanwhile the barrier is set between the organization network and unsafe network (Internet), which prevents illegal access to the information resource, and also the fire wall can be used to prevent the proprietary information illegally output from the enterprise network, thus guaranteeing the safety of the network. However, the existence of the entities, such as the NAT and the fire wall, etc., sets up obstacle for the direct interconnection and punching of the host computer in the P2P network.

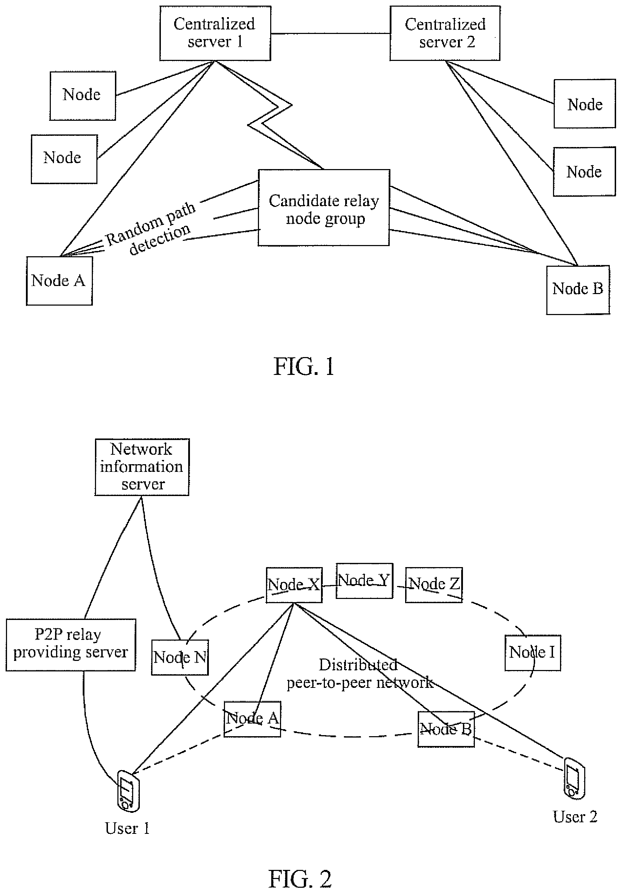

At present, the typical Internet application on the Internet has already adopted the relay node to improve the QoS of the media channel and perform the NAT traversing, for example, the non-structured P2P network topology which is based on the super node and adopts the KaZaA protocol. Under this framework, the management and selection of the relay node adopts the way of the centralized server. As shown in FIG. 1, when node A and node B communicate, the relay node is randomly selected from the numerous nodes provided by the centralized server and the path quality is detected, which results in that the node data required to establish the communication channel is more, the conversation establishment delay is bigger, the network will produce more detection package, and the over burdened relay node might be selected; meanwhile, the centralized server should be responsible for the management work of all relay nodes, which will limit the network size of the relay overlay network.

### Summary of the Invention

The technical problem that the present document requires to solve is to provide a relay node, a distributed network of the relay node and a networking method thereof, which can manage and select the relay node effectively.

The features of the method according to the present invention are defined in the independent claims. Further improvements and embodiments are provided in the dependent claims.

Also provided is a networking method of a distributed network of relay nodes, comprising:
a relay node joining in a distributed peer-to-peer network with its own home domain information being carried, and constructing a local route table;
the relay node, according to pre-obtained neighbor home domain information of a present node, searching the local route table of the present node or searching the local route table of the present node and the local route table of other relay node for the relay node in a neighbor home domain, and constructing a candidate relay node list of the neighbor home domain.

The method further comprises: the relay node obtaining its own home domain information and neighbor home domain information by querying from a network information server.

Further, the local route table stores route information of a plurality of relay nodes in the network, and home domain information of the plurality of the relay nodes; and
the candidate relay node list of the neighbor home domain stores the route information of the relay node in the neighbor home domain of the present node.

Further, the route information comprises an IP address and a port number of the relay node.

Further, when constructing the candidate relay node list of the neighbor home domain, the method further comprises: the relay node searching for the relay node of the neighbor home domain through flooding searching or iterative search.

Further, the relay node maintains the candidate relay node list of the neighbor home domain through one or several of the following ways:
the relay node periodically updating the candidate relay node list of the neighbor home domain;
when network topology changes, the relay node updating the candidate relay node list of the neighbor home domain;
when the relay node perceives that path quality of a member of the candidate relay node list of the neighbor home domain does not meet the requirement, searching again for a substitute node of this node;
the relay node maintaining the candidate relay node list of the neighbor home domain by using an incidentally updating mechanism.

Also provided is a distributed network of a relay node, comprising: a network information server and a relay node, wherein:
the relay node is configured to query home domain information and neighbor home domain information of a present node from the network information server, join in a distributed peer-to-peer network with the home domain information being carried and construct a local route table; and also configured to, according to the neighbor home domain information of the present node, search the local route table of the present node, or the local route table of the present node and the local route table of other relay node for the relay node in a neighbor home domain, and construct a candidate relay node list of the neighbor home domain; and configured to select a relay node for communication;
the network information server is configured to provide query of the home domain information and the neighbor home domain information to the relay node.

Further, the distributed network of the relay node further comprises a peer-to-peer (P2P) relay providing server, configured to, based on a relay request of a non-distributed network node, query home domain information and neighbor home domain information from the network information server replacing the non-distributed network node, select the relay node in a same home domain with the non-distributed network node as an agent relay node for the non-network node, and control the agent relay node to select the relay node for communication;
the relay node is further configured to select the relay node for communication according to control of the P2P relay providing server when being as the agent relay node.

Further, the relay node is further configured to maintain the candidate relay node list of the neighbor home domain through one or several of the following ways:
periodically updating the candidate relay node list of the neighbor home domain;
when network topology changes, updating the candidate relay node list of the neighbor home domain;
when perceiving that path quality of a member of the candidate relay node list of the neighbor home domain does not meet the requirement, searching a substitute node of the node again; and
maintaining the candidate relay node list of the neighbor home domain by using an incidentally updating mechanism.

Further, when the relay node selects the relay node for communication, the relay node is further configured to obtain a candidate relay node group of a common neighbor home domain according to the candidate relay node list of the neighbor home domain of the present node and the candidate relay node list of the neighbor home domain of an opposite end relay node, and select a relay node therein as the relay to realize the communication;
the opposite end relay node is a communication opposite end relay node, or an agent relay node of an opposite end non-distributed network node.

Further, after the relay node obtains the candidate relay node group of the common neighbor home domain, the relay node is further configured to perform a path measure on each relay node in the candidate relay node group, and select a node which meets the path quality requirement as the relay node for communication.

Also provided is a relay node, comprising: a home domain information obtaining unit and a network accessing and list constructing unit, wherein:
the home domain information obtaining unit is configured to obtain home domain information and neighbor home domain information of a present relay node;
the network accessing and list constructing unit is configured to join in a distributed peer-to-peer network with the home domain information of the present node being carried, construct a local route table, and according to the neighbor home domain information of the present node, search the local route table of the present node, or search the local route table of the present node and the local route table of other relay node, search the relay node in a neighbor home domain, and construct a candidate relay node list of the neighbor home domain.

Further, the relay node further comprises a list maintenance unit, configured to maintain the candidate relay node list of the neighbor home domain by adopting one or several of the following ways:
periodically updating the candidate relay node list of the neighbor home domain;
when network topology changes, updating the candidate relay node list of the neighbor home domain;
when perceiving that path quality of a member of the candidate relay node list of the neighbor home domain does not meet the requirement, searching again for a substitute node of the node;
maintaining the candidate relay node list of the neighbor home domain by using an incidentally updating mechanism.

Further, the relay node further comprising a relay selecting unit, configured to obtain a candidate relay node group of a common neighbor home domain according to the candidate relay node list of the neighbor home domain of the present node, and the candidate relay node list of the neighbor home domain of an opposite end relay node, and select a relay node therein as the relay to realize the communication.

By adopting the method and network described in the present document, it manages and selects the relay node effectively without need of the central server. The change to the traditional distributed peer-to-peer network is small, and meanwhile, each node selects the relay node in the local network view, which prevents the problem that the network size is easy to be limited by the selection method of the centralized relay node, and also prevents the problem that the individual relay node is easy to be over burdened by the selection method of the centralized relay node.

### Brief Description of Drawings

FIG. 1 is a diagram of managing and selecting a relay node by adopting a centralized model in the related art.
FIG. 2 is a structure diagram of a system selecting a relay node from a distributed peer-to-peer network composed of relay nodes according to an embodiment of the present invention.
FIG. 3 is a diagram of state establishment process of a relay node according to the first embodiment of the present invention.
FIG. 4 is a flow chart of a relay node maintaining a candidate relay node list of a neighbor home domain according to the second embodiment of the present invention.
FIG. 5 is a flow chart of a relay node user selecting a relay node according to the third embodiment of the present invention.
FIG. 6 is a flow chart of a common user terminal selecting a relay node according to the fourth embodiment of the present invention.

### Preferred Embodiments of the Present Invention

The networking method of a distributed network of relay nodes of the present invention includes: a relay node joining in a distributed peer-to-peer network with its own home domain information being carried, and constructing a local route table; the relay node, according to a pre-obtained neighbor home domain information of a present node, searching the local route table of the present node or searching the local route table of the present node and the local route table of other relay node for the relay node in a neighbor home domain, and constructing a candidate relay node list of the neighbor home domain.

When a certain relay node is located in an autonomy domain, that autonomy domain is the home domain of that relay node; the home domain adjacent to the home domain of that relay node is the neighbor home domain of that relay node.

The local route table of the relay node is the local route information constructed when the relay node joins in the distributed peer-to-peer network according to the corresponding algorithm. Besides of the route information of a plurality of relay nodes in the network, the local route table also stores the home domain information of the plurality of relay nodes. Wherein, the route information of the relay node includes the IP address and port number (PORT) of the node; the home domain information is the information identifying the home domain of the relay node, for example, the home domain information can be a home domain identifier (PID). The local route table of the relay node is shown as Table 1, and it is assumed that the home domain of the node A is PID-A.

**Table 1, the local route table of the node A in the relay overlay network.**

| Node ID | IP address/PORT of the node | The home domain of the node (PID) |
|---|---|---|
| Node X | 172.160.1.24/6084 | PID-2 |
| Node Y | 61.128.0.130/6084 | PID-6 |
| ... | ... | ... |

The candidate relay node list of the neighbor home domain, specifically, stores the neighbor home domain of the present node and the route information of the relay node of each neighbor home domain, wherein, the route information of the relay node includes IP address and port number (PORT); the neighbor home domain information is the number of the neighbor autonomy domain which is 1 hop, 2 hop or 3 hop from the home domain of the present relay node. The example of the candidate relay node list of the neighbor home domain is shown as Table 2, and it is assumed that the home domain of the node A is PID-A.

**Table 2, the candidate relay node list of the neighbor home domain of the node A in the relay network**

| Neighbor home domain (PID) | Member node list (m members at most) |
|---|---|
| PID-1 | {(ID11,IP/PORT), ..., (ID1m,IP/PORT)} |
| PID-2 | {(ID21,IP/PORT), ..., (ID2m,IP/PORT)} |
| ... | ... |
| PID-k | {(IDk1,IP/PORT), ..., (IDkm,IP/PORT)} |

IDij in the table represents the j^{th} node in the i^{th} neighbor home domain of the present relay node, the value of j is from 1 to m, and the value of m is between several to more than ten according to the network size.

The above-mentioned distributed peer-to-peer network can be a structured peer-to-peer network and also can be a non-structured peer-to-peer network.

The relay node obtains its own home domain information and the neighbor home domain information by querying from the network information server. The network information server can be disposed by the network operator, and also can be disposed by the service provider. The division of the network home domain in the network information server can be based on the boundary gateway protocol (BGP) public route data collection, and also can be configured and modified by the operator.

The relay node, when constructing the candidate relay node list of the neighbor home domain, obtains the relay node of the neighbor home domain through flooding searching or iterative search. In addition, it can also adopt other search methods. Usually it needs to search the local route table of the present node and the local route table of the adjacent node, or it might search the local route table of the adjacent node of the adjacent node, but it does not exclude from the situation that only searching the local route table can meet the requirement.

After the distributed network of the relay node is set up completely, each relay node also needs to maintenance the candidate relay node list of its neighbor home domain. For example, the relay node periodically updates the members in the candidate relay node list of its neighbor home domain, and the update period can be determined on demand; or, when the network topology changes, the relay node updates the members in the candidate relay node list of its neighbor home domain; or when the relay node perceives that the path quality of a member of the candidate relay node list of its neighbor home domain does not meet the requirement during the communication process, the relay node searches again for a substitute node of that node; or the relay node maintains the candidate relay node list of its neighbor home domain by using an incidentally updating mechanism.

The distributed network of relay nodes constructed by adopting the above-mentioned method includes a network information server and a relay node, wherein:
the relay node is configured to query home domain information and neighbor home domain information of a present node from the network information server, join in a distributed peer-to-peer network with the home domain information being carried and construct a local route table; and also configured to, according to the neighbor home domain information of the present node, search the local route table of the present node, or the local route table of the present node and the local route table of other relay node for the relay node in a neighbor home domain, and construct a candidate relay node list of the neighbor home domain; and configured to select a relay node for communication;
the network information server is configured to provide query of the home domain information and the neighbor home domain information to the relay node.

The home domain is an identifier used for specifying the network polymerization way. The division of the home domains can be done according to the physical domain or according to the logic domain, for example, the home domains are divided according to the number of the autonomy domain to which the node belongs, or the home domains are divided according to network service provider (ISP) to which the node belongs, etc. In specific implementation, for example, one PID identifier can be one or a combination of several of the following information: subnet, urban area, autonomy domain.

FIG. 2 is a structure diagram of a system of a distributed peer-to-peer network composed of relay nodes according to an embodiment of the present invention. As shown in FIG. 2, the network can further include a peer-to-peer (P2P) relay providing server, wherein, all relay nodes compose one distributed peer-to-peer network, and node A and node B are the exemplary nodes communicating with each other. The communication node in this text includes a relay node and a non-distributed network node (a normal user node). The communication node is the relay node in the relay overlay network, that is, the communication node can establish communication service with other communication nodes, and also can provide the relay function for the communication from other users; the non-relay network node is the node that only uses the relay service provided by the relay overlay network without joining in the relay overlay network.

The P2P relay providing server is configured to, based on a relay request from a non-distributed network node, query the home domain information of the non-relay network node from the network information server replacing the non-distributed network node, select the relay node in the same home domain with the non-distributed network node as an agent relay node for the non-network node, and control the agent relay node to select the relay node for communication. The agent relay node is configured to select the relay node for communication replacing that non-distributed network node. According to the provided function, the P2P relay providing server may be not an independent network element physically. Except running the maintenance function of the original distributed peer-to-peer network, the relay node is further configured to maintain the candidate relay node list of its neighbor home domain, which can be done periodically. For example, the node periodically transmits the path detection information to the member of the candidate node list of the neighbor home domain, and replaces the node which is offline or of which the path quality is decreased.

When the relay node selects the relay node for communication, it obtains a candidate relay node group of a common neighbor home domain according to the candidate relay node list of the neighbor home domain of the present node and the candidate relay node list of the neighbor home domain of an opposite end relay node, and select a relay node therein as the relay to realize the communication; and the opposite end relay node is a communication opposite end relay node, or an agent relay node of an opposite end non-distributed network node.

The relay node for realizing the above-mentioned method includes a home domain information obtaining unit and a network accessing and list constructing unit, wherein:
the home domain information obtaining unit is configured to obtain home domain information and neighbor home domain information of a present relay node;
the network accessing and list constructing unit is configured to join in a distributed peer-to-peer network with the home domain information of the present node being carried, construct a local route table, and according to the neighbor home domain information of the present node, search the local route table of the present node, or search the local route table of the present node and the local route table of other relay node, search the relay node in a neighbor home domain, and construct a candidate relay node list of the neighbor home domain.

The candidate relay node list of the neighbor home domain is configured to store the route information of the relay node in the neighbor home domain of the present node.

The relay node further includes a list maintenance unit, configured to maintain the candidate relay node list of the neighbor home domain by adopting one or several of the following ways:
periodically updating the candidate relay node list of the neighbor home domain;
when network topology changes, updating the candidate relay node list of the neighbor home domain;
when perceiving that path quality of a member of the candidate relay node list of the neighbor home domain does not meet the requirement, searching again for a substitute node of the node;
maintaining the candidate relay node list of the neighbor home domain by using an incidentally updating mechanism.

The relay node further comprising a relay selecting unit, configured to obtain a candidate relay node group of a common neighbor home domain according to the candidate relay node list of the neighbor home domain of the present node, and the candidate relay node list of the neighbor home domain of an opposite end relay node, and select a relay node therein as the relay to realize the communication.

### The first embodiment:

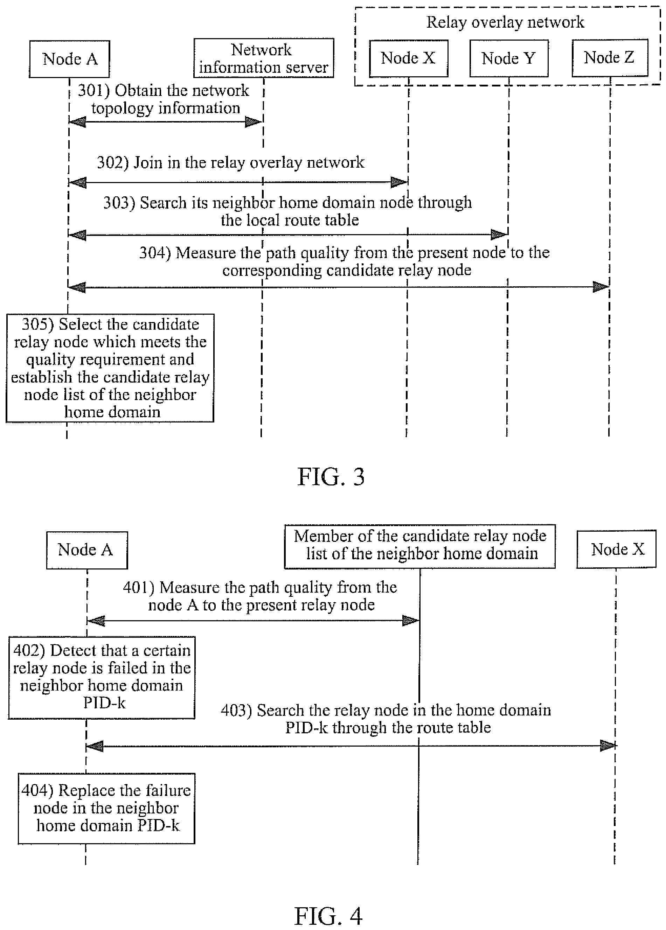

FIG. 3 is a diagram of state establishment process of a relay node. When one node A joins in the relay overlay network, node A needs to perform the joining flow of the distributed peer network firstly; and then searches part of the nodes in its neighbor home domain by using the established local route table, measures the path quality between them, and constructs the candidate relay node list of the neighbor home domain. The specific steps are described as follows.

In step 301, the node A obtains the network topology information including the information of the home domain of the node A and its neighbor home domain from the network information server.

The neighbor home domain refers to the home domain adjacent to the home domain of the present node. When it is assumed that the node A belongs to PID-A, the neighbor home domains are PID-1, PID-2, ..., PID-k respectively. The network information server returns the home domain information of the node A and the query result of the neighbor home domain according to the query of the node A, and the node A can order and store its neighbor home domain on demand, for example, when the home domain is divided according to the autonomy domain information, it can distinguish 1 hop neighbor autonomy domain, 2 hop neighbor autonomy domain, etc.

In step 302, the node A applies to join in the distributed peer-to-peer network composed of the relay nodes, carries the home domain information of the present node, constructs its own local route table according to the local route table of the adjacent relay node, and the local route table of the node A stores the route information and the home domain information of the adjacent relay node, and one local node route table of the node is shown as Table 1.

The node A constructs its own local route table through the interaction with the adjacent relay node. During the interaction with the node A of the adjacent relay node, the home domain information of the adjacent relay node its own is carried. The node A stores the route information and the home domain information of that adjacent relay node in the local route table, and also stores part or all information in the local route table of that adjacent relay node, and it is determined according to the rule in the related art what information in the local route table of that adjacent relay node is stored.

In step 303, the node A searches the local route table, or searches the local route table of the present node and the local route table of other relay node according to the neighbor home domain information of the present node, and searches the relay node in the neighbor home domain PID-1, PID-2, ..., PID-k respectively.

When the node A searches the candidate relay node of neighbor home domain, its search method can adopt the flooding way, and also can adopt the iterative way. For example: the flooding searching way can be proceeded by querying the relay node that meets the requirement from all nodes in the local route table of the current node beginning with the present node, and every node which receives the query request then sends out the same query request to the table nodes of its own local route table. The message initiation node limits the time-to-live (TTL) value of the message as N, and the TTL value is reduced by 1 every time the message is forwarded; when the TTL is zero, the forwarding of the message is stopped. The iterative search method can be proceeded from the current node and query the relay node that meets the requirement from one route table node therein, query from the next route table node after receiving the response of the query request, and the search is stopped when the response message collected by the message initiation node meets the search requirement. The above-mentioned relay node that meets the requirement refers to the relay node located in the neighbor home domain of the present node.

In step 304, the node A measures the path quality of the relay node in each collected neighbor home domain through traceroute.

The detection value of the path quality detection from the node A to the relay node in the neighbor home domain can be standardized directly by using the round trip time (RTT) value, and also can be comprehensively standardized by combining with the operation strategy provided by the operator, such as the parameters of the bandwidth between the PID, the rate, etc.

In step 305, the node A selects the relay node which meets the path quality standard defined by each neighbor home domain as the candidate relay node, constructs the candidate relay node list of the neighbor home domain of the node A, and the candidate relay node list of the neighbor home domain of the node is shown as Table 2.

The node A can define different rules for every neighbor home domain, for example, the one of which the time delay to the local node is not great than 50ms is the candidate relay node of 1 hop neighbor autonomy domain, the one of which the time delay to the local node is not great than 100ms is the candidate relay node of 2 hop neighbor autonomy domain, etc.

The member quantity of the candidate relay node list of the neighbor home domain constructed by the node A can be set according to the network size and the actual condition, for example, the m value is used to limit the quantity, the measure value of the path measure is used to limit the member quantity. The members in the candidate relay node list of the neighbor home domain can be ordered according to the measured value of the path measure.

### The second embodiment:

After the distributed network of the relay node is constructed completely, each relay node also needs to maintain the candidate relay node list of its neighbor home domain. FIG. 4 is a flow chart of a relay node maintaining the candidate relay node list of its neighbor home domain. When the relay node periodically updates the candidate relay node list of the neighbor home domain, this procedure can be started.

In step 401, the node A periodically initiates the path quality measure from the present node to the member of the candidate relay node list of each neighbor home domain.

In step 402, the node A judges the effectiveness of the candidate relay node according to the path measure result, and determine a candidate relay node to be failed when the path quality from the node A to that candidate relay node in the neighbor home domain PID-k does not meet the requirement.

The node A can update the original path quality value by using the recently measured path quality value, in order to keep the real-time of the path quality parameter.

In step 403, as to the member in the neighbor home domain which does not meet the path quality, the node A searches for a substitute node by using the local route table to perform the replacement. The replacement of the failed node can be performed by adopting the search mechanism when constructing the list, for example, flooding searching for the relay node in its neighbor home domain through the local route table, or iteratively searching for the relay node in its neighbor home domain through the local route table, or other search methods can be used to do it.

In step 404, the node A selects the relay node meeting the path quality requirement from the returned search result to replace the failed relay node.

The node A can also adopt "incidentally updating" mechanism to update the candidate relay node list of its neighbor home domain, for example, the node A regards the time delay from sending the request to receiving the response message as the path quality information, in this way when the node A is performing the routing of other messages, it can add the receiving terminal node which meets the quality condition into the corresponding candidate relay node list of the neighbor home domain.

When the relay node percepts that the overall network topology changes, it can also use the above-mentioned procedure to replace the failed node. At this moment, the relay node initiates that the path quality measure from the present node to the member of the candidate relay node list of each neighbor home domain, and then steps 402 - 404 are executed. Or, when the relay node initiates that the state of the member node in the candidate relay node list of its neighbor home domain is unusual, for example, when the path with the candidate relay node of the neighbor home domain is different or changes, the node is judged to be failed, and the relay node which meets the path quality requirement is selected to replace the failed relay node according to the above-mentioned procedures.

### The third embodiment:

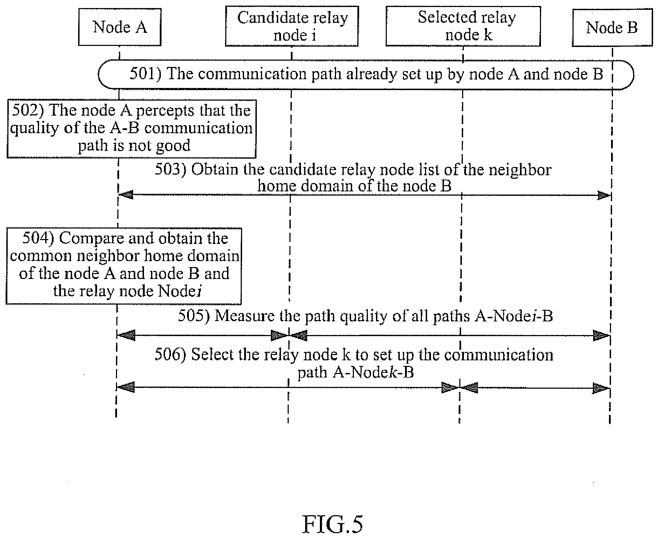

FIG. 5 is a flow chart of a relay node user selecting a relay node to improve the QoS. Wherein, the user node is the member node of the relay overlay network, that is, the user node has its own candidate relay node list of its neighbor home domain, which can provide the relay service for other users.

In step 501, the communication is performed between node A and node B.

In step 502, the node A percepts that the path quality of the direct connection between A-B does not meet the requirement, then it initiates the relay node selection procedure.

If the member node B of the relay overlay network percepts that the path quality does not meet the requirement, it also can initiate the same procedure.

In step 503, the node A obtains the candidate relay node list of the neighbor home domain of the node B, and acquires the neighbor home domain of the node B (PID-B1, PID-B2, ... ,PID-Bk) and the candidate relay node in each neighbor home domain according to this list.

The node A can interact with the node B by controlling the signaling channel and obtain the candidate relay node list of the neighbor home domain of the node B.

In step 504, the node A compares the neighbor home domain information of both sides of the node A and B, {PID-A1, PID-A2, ..., PID-Ak} and {PID-B1, PID-B2, ... ,PID-Bk}, and takes the member in the common neighbor home domain as the candidate relay node group {Node/}.

If the common neighbor home domain is not found, then returns failure.

In step 505, the node A tests the path A-Nodei-B for the member node {Node*i*} of the selected candidate relay node group.

In other embodiments, the node A also can no longer test the path, and performs step 506 to set up the communication path directly, which considers that the node in the candidate relay node list of the neighbor home domain finishes the path test.

In step 506, the node A selects the node I which meets the path quality requirement to set up the communication path A-Nodei-B between the nodes A and B according to the measure result.

If there is no relay node which meets the path quality requirement, then it is failed to select the relay node; if there is a plurality of relay nodes which meet the path quality requirement, then it can set up the backup relay path channel or the multipath communication channel.

### The fourth embodiment:

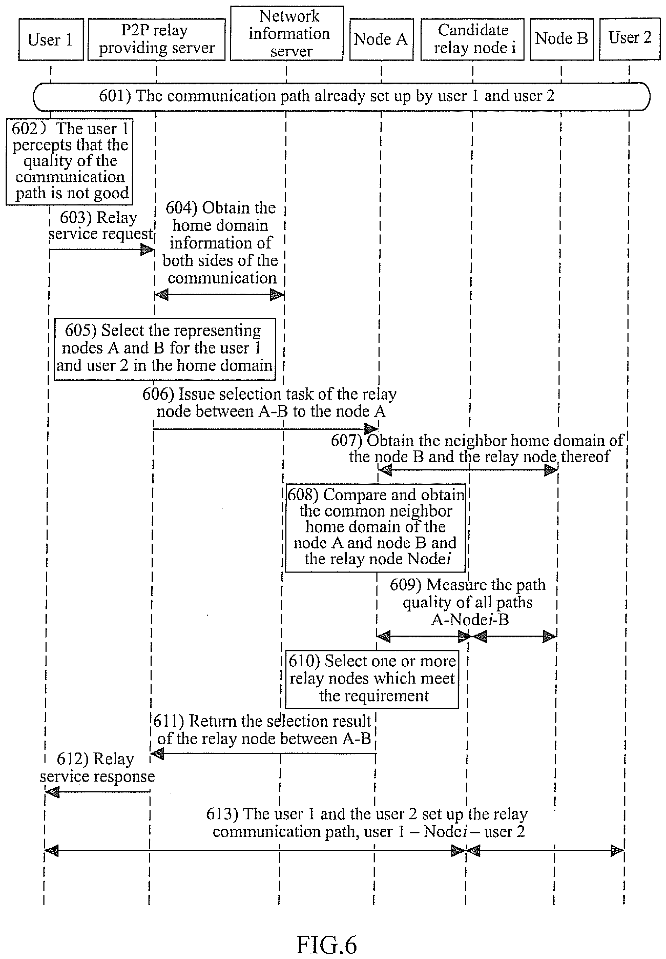

FIG. 6 is a flow chart of a common user terminal selecting a relay node. Wherein the user 1 and the user 2 are normal user nodes, which do not join in the relay overlay network, and do not possess the relay function.

In step 601, the communication is performed between the user 1 and the user 2.

In step 602, the user 1 percepts that the path quality of the direct connection between the user 2 and the user 1 does not meet the requirement.

In step 603, the user 1 initiates the relay service request to the P2P relay providing server, to require to select the relay node between the user 1 and the user 2 to perform the communication.

The P2P relay providing server can judge whether both sides of the communication are normal user nodes according to the relay service request. The P2P relay providing server obtains the home domain information and selects the agent relay node for the normal user node by representing the normal user node in the communication.

In step 604, the P2P relay providing server queries their own home PID information, PID-1 and PID-2 respectively, of the user 1 and the user 2 from the network information server,.

In step 605, the P2P relay providing server selects the agent node A and node B of the relay overlay network respectively for the user 1 and the user 2, wherein, the node A belongs to PID-1 and the node B belongs to PID-2.

Wherein, the agent node A selected for the user 1 has same home domain with the user 1, and the agent node B selected for the user 2 has same home domain with the user 2.

In step 606, the P2P relay providing server releases the selection task of relay node to the node A, to indicate the node A to select the relay node.

The P2P relay providing server can also issue this selection task of relay node to the node B at the same time, to require the node B to cooperate finishing the relay node selection.

In step 607, the node A obtains the neighbor home domain (PID-B1, PID-B2, ... , PID-Bk) of the node B and the relay node corresponding to that neighbor home domain.

In step 608, the node A compares the neighbor home domain information of both sides of the node A and B, {PID-A1, PID-A2, ..., PID-Ak} and {PID-B1, PID-B2, ... ,PID-Bk}, and takes the list member in the public neighbor home domain as the candidate relay node group {Node*i*}.

In step 609, the node A tests the path A-Node*i*-B for the member of the member node {Node*i*} of the selected candidate relay node group.

In step 610, the node A selects the node I which meets the path quality requirement as the candidate relay node according to the measure result.

In step 611, the node A returns the response of this relay selection task to the P2P relay providing server, telling the information of the candidate relay node.

In step 612, the P2P relay providing server returns the relay service response to the user 1, and returns the information of the selected candidate relay node I to the user 1.

Meanwhile, the P2P relay providing server also can announce the candidate relay node to the user 2 , and the specific way is determined by the communication consultation module adopted specifically among the users.

In step 613, the communication path of the communication channel, the user 1 - Nodei- the user 2, is set up through the relay node I between the user 1 and the user 2. The user 1 and the user 2 also can select a plurality of relay nodes which meet the quality requirement on demand, and set up the back relay path channel or the multipath communication channel.

Obviously, the present invention can have a variety of other embodiments. Those skilled in the art can make the corresponding modifications and variations according to the present invention without departing from the scope of the present invention. And all of these modifications or the variations should be embodied in the scope of the appending claims of the present invention.

## Claims

1. A networking method of a distributed network of relay nodes, the method comprising:
a relay node obtaining (301) own home domain information and neighbor home domain information by querying from a network information server, wherein the home domain information comprises a home domain identifier;
the relay node joining (302) in a distributed peer-to-peer network with own home domain information being carried, and constructing a local route table;
the relay node, according to pre-obtained neighbor home domain information of a present node, searching (303) the local route table of the present node or searching the local route table of the present node and the local route table of other relay node for the relay node in a neighbor home domain, and constructing a candidate relay node list of the neighbor home domain.

2. The method according to claim 1, wherein,
the local route table stores route information of a plurality of relay nodes in the network, and home domain information of the plurality of the relay nodes;
the candidate relay node list of the neighbor home domain stores route information of the relay node in the neighbor home domain of the present node.

3. The method according to claim 2, wherein, the route information comprises an IP address and a port number of the relay node.

4. The method according to claim 1, when constructing the candidate relay node list of the neighbor home domain, the method further comprising: the relay node searching for the relay node of the neighbor home domain through flooding searching or iterative search.

5. The method according to claim 1, further comprising: the relay node maintaining the candidate relay node list of the neighbor home domain through one or several of the following ways:
the relay node periodically updating the candidate relay node list of the neighbor home domain;
when network topology changes, the relay node updating the candidate relay node list of the neighbor home domain;
when the relay node perceives that path quality of a member of the candidate relay node list of the neighbor home domain does not meet the requirement, searching again for a substitute node of this node;
the relay node maintaining the candidate relay node list of the neighbor home domain by using an incidentally updating mechanism.

6. A distributed network of a relay node, the distributed network comprising: a network information server and a relay node, wherein:
the relay node is configured to query (301) home domain information and neighbor home domain information of a present node from the network information server, wherein the home domain information comprises a home domain identifier, join (302) in a distributed peer-to-peer network with the home domain information being carried and construct a local route table; and also configured to, according to the neighbor home domain information of the present node, search (303) the local route table of the present node, or the local route table of the present node and the local route table of other relay node for the relay node in a neighbor home domain, and construct a candidate relay node list of the neighbor home domain; and configured to select a relay node for communication;
the network information server is configured to provide query of the home domain information and the neighbor home domain information to the relay node.

7. The distributed network of the relay node according to claim 6, further comprising a peer-to-peer P2P relay providing server, configured to, based on a relay request of a non-distributed network node, query home domain information and neighbor home domain information from the network information server replacing the non-distributed network node, select the relay node in a same home domain with the non-distributed network node as an agent relay node for the non-network node, and control the agent relay node to select the relay node for communication;
the relay node is further configured to select the relay node for communication according to control of the P2P relay providing server when being as the agent relay node.

8. The distributed network of the relay node according to claim 6, wherein, the relay node is further configured to maintain the candidate relay node list of the neighbor home domain through one or several of the following ways:
periodically updating the candidate relay node list of the neighbor home domain;
when network topology changes, updating the candidate relay node list of the neighbor home domain;
when perceiving that path quality of a member of the candidate relay node list of the neighbor home domain does not meet requirement, searching a substitute node of the node again;
maintaining the candidate relay node list of the neighbor home domain by using an incidentally updating mechanism.

9. The distributed network of the relay node according to claim 6 or 7, wherein,
when the relay node selects the relay node for communication, the relay node is further configured to obtain a candidate relay node group of a common neighbor home domain according to the candidate relay node list of the neighbor home domain of the present node and the candidate relay node list of the neighbor home domain of an opposite end relay node, and select a relay node therein as the relay to realize the communication;
the opposite end relay node is a communication opposite end relay node, or an agent relay node of an opposite end non-distributed network node.

10. The distributed network of the relay node according to claim 9, wherein, after the relay node obtains the candidate relay node group of the common neighbor home domain, the relay node is further configured to perform a path measure on each relay node in the candidate relay node group, and select a node which meets the path quality requirement as the relay node for communication.

11. A relay node, comprising: a home domain information obtaining unit and a network accessing and list constructing unit, wherein:
the home domain information obtaining unit is configured to obtain (301) home domain information and neighbor home domain information of a present relay node, wherein the home domain information comprises a home domain identifier;
the network accessing and list constructing unit is configured to join (302) in a distributed peer-to-peer network with the home domain information of the present node being carried, construct a local route table, and according to the neighbor home domain information of the present node, search (303) the local route table of the present node, or search the local route table of the present node and the local route table of other relay node, search the relay node in a neighbor home domain, and construct a candidate relay node list of the neighbor home domain.

12. The relay node according to claim 11, wherein,
the relay node further comprises a list maintenance unit, configured to maintain the candidate relay node list of the neighbor home domain by adopting one or several of the following ways:
periodically updating the candidate relay node list of the neighbor home domain;
when network topology changes, updating the candidate relay node list of the neighbor home domain;
when perceiving that path quality of a member of the candidate relay node list of the neighbor home domain does not meet the requirement, searching again for a substitute node of the node;
maintaining the candidate relay node list of the neighbor home domain by using an incidentally updating mechanism.

13. The relay node according to claim 11, wherein,
the relay node further comprising a relay selecting unit, configured to obtain a candidate relay node group of a common neighbor home domain according to the candidate relay node list of the neighbor home domain of the present node and the candidate relay node list of the neighbor home domain of an opposite end relay node, and select a relay node therein as the relay to realize the communication.

## Patentansprüche

1. Networking-Verfahren eines verteilten Netzwerks von Relais-Knoten, wobei das Verfahren umfasst:
ein Relais-Knoten erhält (301) eigene Home-Domänen-Information und Nachbar-Home-Domänen-Information durch Abfragen von einem Netzwerk-Informations-Server, worin die Home-Domänen-Information einen Home-Domänen-Identifikator umfasst;
der Relais-Knoten tritt (302) einem verteilten peer-to-peer-Netzwerk mit enthaltener eigener Home-Domänen-Information bei, und erstellt eine lokale Routing-Tabelle;
der Relais-Knoten sucht (303) gemäß der vorher erhaltenen Nachbar-Home-Domänen-Information eines aktuellen Knotens die lokale Routing-Tabelle des aktuellen Knoten oder sucht die lokale Routing-Tabelle des aktuellen Knotens und die lokale Routing-Tabelle eines anderen Relais-Knotens für den Relais-Knoten in einer Nachbar-Home-Domäne, und erstellt eine Kandidaten Relais-Knoten-Liste der Nachbar - Home-Domäne.

2. Verfahren nach Anspruch 1, wobei,
die lokale Routing-Tabelle Routing-Information mehrerer Relais-Knoten in dem Netzwerk speichert, und Home-Domänen-Information der mehreren Relais-Knoten;
die Kandidaten-Relais-Knoten-Liste der Nachbar-Home-Domäne Routing-Information des Relais-Knotens in der Nachbar-Home-Domäne des aktuellen Knotens speichert.

3. Verfahren nach Anspruch 2, wobei die Routing-Information eine IP-Adresse und eine Port-Nummer des Relais-Knotens umfasst.

4. Verfahren nach Anspruch 1, wobei beim Erstellen der Kandidaten-Relais-Knoten-Liste der Nachbar-Home-Domäne, das Verfahren weiter umfasst: der Relais-Knoten sucht den Relais-Knoten der Nachbar-Home-Domäne mittels Überflutungs-Suchen oder iterativem Suchverfahren.

5. Verfahren nach Anspruch 1, welches weiter umfasst: die Relais-Knoten halten die Kandidaten-Relais-Knoten-Liste der Nachbar-Home-Domäne auf eine der mehreren folgenden Art und Weisen :
der Relais-Knoten aktualisiert periodisch die Kandidaten-Relais-Knoten-Liste der Nachbar-Home-Domäne;
ändert sich die Netzwerk-Topologie, dann aktualisiert der Relais-Knoten die Kandidaten-Relais-Knoten-Liste der Nachbar-Home-Domäne;
erkennt der Relais-Knoten, dass die Wegbeschaffenheit eines Elements der Kandidaten-Relais-Knoten-Liste der Nachbar-Home-Domäne den Anforderungen nicht genügt, dann wird erneut nach einem Ersatz-Knoten für diesen Knoten gesucht;
der Relais-Knoten hält die Kandidaten-Relais-Knoten-Liste der Nachbar-Home-Domäne durch Verwenden eines zufälligen Aktualisierungs-Mechanismus aufrecht.

6. Verteiltes Netzwerk eines Relais-Knoten, worin das verteilte Netzwerk umfasst: einen Netzwerk-Informations-Server und einen Relais-Knoten, worin:
der Relais-Knoten ausgestaltet ist, Home-Domänen-Information und Nachbar-Home-Domänen-Information eines aktuellen Knotens von dem Netzwerk Information-Server abzufragen (301), worin die Home-Domänen-Information einen Home-Domänen-Identifikator umfasst, an einem verteilten peer-to-peer-Netzwerk mit der enthaltenen Home-Domänen-Information teilzunehmen (302) und eine lokale Routing-Tabelle zu erstellen; und weiter ausgestaltet ist, gemäß der Nachbar-Home-Domänen-Information des aktuellen Knotens, die lokale Routing-Tabelle des aktuellen Knotens, oder die lokale Routing-Tabelle des aktuellen Knotens und die lokale Routing-Tabelle des anderen Relais-Knotens für den Relais-Knoten in einer Nachbar-Home-Domäne zu suchen (303), und eine Kandidaten-Relais-Knoten-Liste der Nachbar-Home-Domäne zu erstellen; und ausgestaltet ist, einen Relais-Knoten zur Kommunikation zu wählen;
worin der Netzwerk-Information-Server ausgestaltet ist, eine Abfrage der Home-Domänen-Information und der Nachbar-Home-Domäne Information zu dem Relais-Knoten zu liefern.

7. Verteiltes Netzwerk des Relais-Knotens nach Anspruch 6, welcher weiter einen peer-to-peer P2P Relais liefernden Server umfasst, der ausgestaltet ist, basierend auf der Relais-Abfrage des nicht-verteilten Netzwerk-Knotens, Home-Domänen-Information und Nachbar-Home-Domäne Information von dem Netzwerk-Informations-Server abzufragen, der den Knoten des nicht-verteilten Netzwerks ersetzt, den Relais-Knoten in der gleichen Home-Domäne mit dem nicht-verteilten Netzwerk-Knoten als ein Makler-Relais-Knoten für den Nicht-Netzwerk-Knoten zu wählen, und den Makler-Relais-Knoten zu steuern, um den Relais-Knoten zur Kommunikation zu wählen;
worin der Relais-Knoten weiter ausgestaltet ist, den Relais-Knoten zur Kommunikation gemäß der Steuerung des P2P-Relais-bereitsstellenden Servers zu wählen, wenn er wie der Makler-Knoten ist.

8. Verteiltes Netzwerk des Relais-Knotens nach Anspruch 6, worin der Relais-Knoten weiter ausgestaltet ist, die Kandidaten-Relais-Knoten-Liste der Nachbar-Home-Domäne auf eine der mehreren der folgenden Arten und Weisen zu halten:
periodisches Aktualisieren der Kandidaten-Relais-Knoten-Liste der Nachbar-Home-Domäne;
wenn sich die Netzwerk-Topologie ändert, Aktualisieren der Kandidaten-Relais-Knoten-Liste der Nachbar-Home-Domäne;
wenn festgestellt wird, dass die Wegbeschaffenheit eines Elements der Kandidaten-Relais-Knoten-Liste der Nachbar-Home-Domäne den Anforderungen nicht genügt, erneut Suchen nach einem Ersatz-Knoten;
Halten der Kandidaten-Relais-Knoten-Liste der Nachbar-Home-Domäne durch Verwenden eines zufälligen Aktualisierungs-Mechanismus.

9. Verteiltes Netzwerk des Relais-Knotens nach Anspruch 6 oder 7, worin,
wenn der Relais-Knoten den Relais-Knoten zur Kommunikation wählt, dann ist der Relais-Knoten weiter ausgestaltet, eine Kandidaten-Relais-Knoten-Gruppe einer gemeinsamen Nachbar-Home-Domäne gemäß der Kandidaten-Relais-Knoten-Liste der Nachbar-Home-Domäne des aktuellen Knotens und die Kandidaten-Relais-Knoten-Liste der Nachbar-Home-Domäne eines Relais-Knotens am anderen Ende zu erhalten, und einen Relais-Knoten darin als Relais zu wählen, um die Kommunikation zu realisieren;
worin der Relais-Knoten am anderen Ende ein Kommunikation-am anderen Ende Relais-Knoten ist, oder ein Makler-Relais-Knoten eines nicht-verteilten Netzwerk-Knotens am anderen Ende.

10. Verteiltes Netzwerk des Relais-Knotens nach Anspruch 9, worin, nachdem der Relais-Knoten die Kandidaten-Relais-Knoten-Gruppe der gemeinsamen Nachbar-Home-Domäne erhält, der Relais-Knoten weiter ausgestaltet ist, eine Wegmessung an jedem Relais-Knoten in der Kandidaten-Relais-Knoten-Gruppe durchzuführen, und einen Knoten zu wählen, der den Wegbeschaffenheits-Anforderungen als der Relais-Knoten zur Kommunikation genügt.

11. Relais-Knoten, welcher umfasst: eine Home-Domänen-Information erhaltende Einheit und eine Netzwerk-Zugangs- und Listen-erstellende Einheit, worin:
die Home-Domänen-Information erhaltende Einheit ausgestaltet ist, Home-Domänen-Information und Nachbar-Home-Domänen Information eines aktuellen Knotens zu erhalten (301), worin die Home-Domänen-Information einen Home-Domänen-Identifikator umfasst;
worin die Netzwerk-Zugangs- und Listen-Erzeugungs-Einheit ausgestaltet ist, einem verteilten peer-to-peer Netzwerk mit der enthaltenen Home-Domänen-Information des aktuellen Knotens beizutreten (302), eine lokale Routing-Tabelle zu erstellen, und gemäß der Nachbar-Home-Domänen-Information des aktuellen Knotens, die lokale Routing-Tabelle des aktuellen Knotens zu suchen (303), oder die lokale Routing-Tabelle des aktuellen Knotens und die lokale Routing-Tabelle eines anderen Relais-Knotens zu suchen, den Relais-Knoten in einer Nachbar-Home-Domäne zu suchen, und eine Kandidaten-Relais-Knoten-Liste der Nachbar-Home-Domäne zu erstellen.

12. Relais-Knoten nach Anspruch 11, worin,
der Relais-Knoten weiter eine Listen-Aufrechterhaltungs-Einheit umfasst, die ausgestaltet ist, die Kandidaten-Relais-Knoten-Liste der Nachbar-Home-Domäne durch Befolgen einer der mehreren der folgenden Wege, zu halten:
periodisches Aktualisieren der Kandidaten-Relais-Knoten-Liste der Nachbar-Home-Domäne;
ändert sich die Netzwerk-Topologie, Aktualisieren der Kandidaten-Relais-Knoten-Liste der Nachbar-Home-Domäne;
wenn erkannt wird, dass die Wegbeschaffenheit eines Elements der Kandidaten-Relais-Knoten-Liste der Nachbar-Home-Domäne den Anforderungen nicht genügt, erneut Suchen nach einem Ersatz-Knoten für den Knoten;
Halten der Kandidaten-Relais-Knoten-Liste der Nachbar-Home-Domäne durch Verwenden eines zufälligen Aktualisierungs-Mechanismus.

13. Relais-Knoten nach Anspruch 11, worin,
der Relais-Knoten weiter eine Relais-wählende Einheit umfasst, die ausgestaltet ist, eine Kandidaten-Relais-Knoten-Gruppe einer gemeinsamen Nachbar-Home-Domäne gemäß der Kandidaten-Relais-Knoten-Liste der Nachbar-Home-Domäne des aktuellen Knotens und der Kandidaten-Relais-Knoten-Liste der Nachbar-Home-Domäne eines Relais-Knotens am anderen Ende zu erhalten, und einen Relais-Knotens als das Relais zur Erstellung der Kommunikation zu wählen.

## Revendications

1. Procédé de mise en réseau d'un réseau réparti de noeuds de relais, le procédé comprenant les étapes ci-dessous dans lesquelles :
un noeud de relais obtient (301) des informations de domaine de rattachement propre et des informations de domaine de rattachement voisin, en interrogeant un serveur d'informations de réseau, dans lequel les informations de domaine de rattachement comprennent un identifiant de domaine de rattachement ;
le noeud de relais rejoint (302) un réseau poste-à-poste réparti avec des informations de domaine de rattachement propre transportées, et construit une table d'itinéraires locaux ;
le noeud de relais, selon des informations de domaine de rattachement voisin obtenues au préalable d'un noeud en cours, recherche (303) dans la table d'itinéraires locaux du noeud en cours, ou recherche dans la table d'itinéraires locaux du noeud en cours et dans la table d'itinéraires locaux d'un autre noeud de relais, le noeud de relais dans un domaine de rattachement voisin, et construit une liste de noeuds de relais candidats du domaine de rattachement voisin.

2. Procédé selon la revendication 1, dans lequel :
la table d'itinéraires locaux stocke des informations d'itinéraires d'une pluralité de noeuds de relais dans le réseau, et des informations de domaine de rattachement de la pluralité des noeuds de relais ;
la liste de noeuds de relais candidats du domaine de rattachement voisin stocke des informations d'itinéraires du noeud de relais dans le domaine de rattachement voisin du noeud en cours.

3. Procédé selon la revendication 2, dans lequel les informations d'itinéraires comprennent une adresse IP et un numéro de port du noeud de relais.

4. Procédé selon la revendication 1, dans lequel, lors de la construction de la liste de noeuds de relais candidats du domaine de rattachement voisin, le procédé comprend en outre l'étape ci-après dans laquelle : le noeud de relais recherche le noeud de relais du domaine de rattachement voisin par le biais d'une recherche par inondation ou d'une recherche itérative.

5. Procédé selon la revendication 1, comprenant en outre l'étape ci-après dans laquelle : le noeud de relais maintient la liste de noeuds de relais candidats du domaine de rattachement voisin, d'une ou plusieurs des manières suivantes dans lesquelles :
le noeud de relais met périodiquement à jour la liste de noeuds de relais candidats du domaine de rattachement voisin ;
lorsque la topologie de réseau change, le noeud de relais met à jour la liste de noeuds de relais candidats du domaine de rattachement voisin ;
lorsque le noeud de relais perçoit qu'une qualité de chemin d'un membre de la liste de noeuds de relais candidats du domaine de rattachement voisin ne satisfait pas l'exigence, il recherche à nouveau un noeud de remplacement de ce noeud ;
le noeud de relais maintient la liste de noeuds de relais candidats du domaine de rattachement voisin en utilisant un mécanisme de mise à jour incidente.

6. Réseau réparti d'un noeud de relais, le réseau réparti comprenant :
un serveur d'informations de réseau et un noeud de relais, dans lequel :
le noeud de relais est configuré de manière à interroger (301) des informations de domaine de rattachement et des informations de domaine de rattachement voisin d'un noeud en cours, à partir du serveur d'informations de réseau, dans lequel les informations de domaine de rattachement comprennent un identifiant de domaine de rattachement, à rejoindre (302) un réseau poste-à-poste réparti avec les informations de domaine de rattachement transportées, et à construire une table d'itinéraires locaux ; et il est également configuré de manière à, selon les informations de domaine de rattachement voisin du noeud en cours, rechercher (303) dans la table d'itinéraires locaux du noeud en cours, ou dans la table d'itinéraires locaux du noeud en cours et dans la table d'itinéraires locaux d'un autre noeud de relais, le noeud de relais dans un domaine de rattachement voisin, et à construire une liste de noeuds de relais candidats du domaine de rattachement voisin ; et il est configuré de manière à sélectionner un noeud de relais pour la communication ;
le serveur d'informations de réseau est configuré de manière à fournir une interrogation des informations de domaine de rattachement et des informations de domaine de rattachement voisin au noeud de relais.

7. Réseau réparti du noeud de relais selon la revendication 6, comprenant en outre un serveur de fourniture de relais poste-à-poste, P2P, configuré de manière à, sur la base d'une demande de relais d'un noeud de réseau non réparti, interroger des informations de domaine de rattachement et des informations de domaine de rattachement voisin à partir du serveur d'informations de réseau remplaçant le noeud de réseau non réparti, sélectionner le noeud de relais dans un même domaine de rattachement avec le noeud de réseau non réparti en tant que noeud de relais agent pour le noeud de réseau non réparti, et commander au noeud de relais agent de sélectionner le noeud de relais pour la communication ;
le noeud de relais est en outre configuré de manière à sélectionner le noeud de relais pour la communication, selon le serveur de fourniture de relais P2P, en tant que le noeud de relais agent.

8. Réseau réparti du noeud de relais selon la revendication 6, dans lequel le noeud de relais est en outre configuré de manière à maintenir la liste de noeuds de relais candidats du domaine de rattachement voisin d'une ou plusieurs des manières suivantes consistant à :
mettre à jour périodiquement la liste de noeuds de relais candidats du domaine de rattachement voisin ;
lorsque la topologie de réseau change, mettre à jour la liste de noeuds de relais candidats du domaine de rattachement voisin ;
lorsqu'il perçoit que la qualité de chemin d'un membre de la liste de noeuds de relais candidats du domaine de rattachement voisin ne satisfait pas l'exigence, rechercher à nouveau un noeud de remplacement du noeud ;
maintenir la liste de noeuds de relais candidats du domaine de rattachement voisin en utilisant un mécanisme de mise à jour incidente.

9. Réseau réparti du noeud de relais selon la revendication 6 ou 7, dans lequel,
lorsque le noeud de relais sélectionne le noeud de relais pour la communication, le noeud de relais est en outre configuré de manière à obtenir un groupe de noeuds de relais candidats d'un domaine de rattachement voisin commun selon la liste de noeuds de relais candidats du domaine de rattachement voisin du noeud en cours et la liste de noeuds de relais candidats du domaine de rattachement voisin d'un noeud de relais d'extrémité opposée, et à sélectionner un noeud de relais dans celui-ci en tant que le relais pour réaliser la communication ;
le noeud de relais d'extrémité opposée est un noeud de relais d'extrémité opposée de communication, ou un noeud de relais agent d'un noeud de réseau non réparti d'extrémité opposée.

10. Réseau réparti du noeud de relais selon la revendication 9, dans lequel, après que le noeud de relais a obtenu le groupe de noeuds de relais candidats du domaine de rattachement voisin commun, le noeud de relais est en outre configuré de manière à mettre en oeuvre une mesure de chemin sur chaque noeud de relais dans le groupe de noeuds de relais candidats, et à sélectionner un noeud qui satisfait l'exigence de qualité de chemin, en tant que le noeud de relais pour la communication.

11. Noeud de relais, comprenant : une unité d'obtention d'informations de domaine de rattachement et une unité d'accès au réseau et de construction de liste, dans lequel :
l'unité d'obtention d'informations de domaine de rattachement est configurée de manière à obtenir (301) des informations de domaine de rattachement et des informations de domaine de rattachement voisin d'un noeud de relais en cours, dans lequel les informations de domaine de rattachement comprennent un identifiant de domaine de rattachement ;
l'unité d'accès au réseau et de construction de liste est configurée de manière à rejoindre (302) un réseau poste-à-poste réparti avec les informations de domaine de rattachement du noeud en cours transportées, et à construire une table d'itinéraires locaux, et, selon les informations de domaine de rattachement voisin du noeud en cours, à rechercher (303) dans la table d'itinéraires locaux du noeud en cours, ou à rechercher dans la table d'itinéraires locaux du noeud en cours et dans la table d'itinéraires locaux d'un autre noeud de relais, le noeud de relais dans un domaine de rattachement voisin, et construire une liste de noeuds de relais candidats du domaine de rattachement voisin.

12. Noeud de relais selon la revendication 11, dans lequel,
le noeud de relais comprend en outre une unité de maintenance de liste, configurée de manière à maintenir la liste de noeuds de relais candidats du domaine de rattachement voisin en suivant une ou plusieurs des manières suivantes consistant à :
mettre à jour périodiquement la liste de noeuds de relais candidats du domaine de rattachement voisin ;
lorsque la topologie de réseau change, mettre à jour la liste de noeuds de relais candidats du domaine de rattachement voisin ;
lorsqu'il perçoit que la qualité de chemin d'un membre de la liste de noeuds de relais candidats du domaine de rattachement voisin ne satisfait pas l'exigence, rechercher à nouveau un noeud de remplacement du noeud ;
maintenir la liste de noeuds de relais candidats du domaine de rattachement voisin en utilisant un mécanisme de mise à jour incidente.

13. Noeud de relais selon la revendication 11, dans lequel,
le noeud de relais comprend en outre une unité de sélection de relais, configurée de manière à obtenir un groupe de noeuds de relais candidats d'un domaine de rattachement voisin commun, selon la liste de noeuds de relais candidats du domaine de rattachement voisin du noeud en cours et la liste de noeuds de relais candidats du domaine de rattachement voisin d'un noeud de relais d'extrémité opposée, et à sélectionner un noeud de relais dans celui-ci en tant que le relais pour réaliser la communication.
